# EUROPEAN PATENT SPECIFICATION

(11) **EP 0 355 355 B1**
(45) Date of publication and mention of the grant of the patent: **19.01.1994**
(21) Application number: 89112481.0
(22) Date of filing: 07.07.1989
(51) Int. Cl.: G07G 1/00, G06K 7/00, G06K 7/10

(54) **Portable scanning system including a surveillance tag deactivator**
Tragbares Abtastsystem, das einen Überwachungsetikett-Ausmacher enthält
Système portable de balayage comprenant un désactivateur de plaque de surveillance

(30) Priority: 25.08.1988 US 236249
(43) Date of publication of application: 28.02.1990
(73) Proprietor: SYMBOL TECHNOLOGIES, INC., Bohemia New York 11716-3300 (US)
(72) Inventor: Swartz, Jerome, Old Field, NY 11733 (US)
(74) Representative: Wagner, Karl H., Dipl.-Ing.

(56) References cited:
- EP-A- 0 112 493
- WO-A-87/04283
- DE-A- 2 834 050
- DE-A- 2 844 242
- DE-A- 3 015 811
- GB-A- 1 212 504
- US-A- 3 896 372
- US-A- 4 158 434
- US-A- 4 318 090

## Description

### BACKGROUND OF THE INVENTION

### 1. Field of the Invention

The present invention generally relates to hand-held laser scanning systems for reading data in the form of indicia such as bar code symbols, and more particularly, to a lightweight, portable scanner supportable by a user and having the operational capability both to read a symbol associated with an article and to deactivate a surveillance tag associated with the article.

### 2. Description of the Prior Art

Various types of scanning systems are known in the prior art that are able to read bar code symbols. Bar code symbols are applied to the surface of an article in order to represent data which can be read by a scanner. The data may be used to identify the article or other characteristics thereof. The bar code symbol itself is a coded pattern of indicia comprised of a series of bars of various widths, spaced apart from one another to bound spaces of various widths.

Various types of desk-top or portable, hand-held scanner systems are exemplified by U.S. Pat. Nos. 4,369,361; 4,387,297; and 4,409,470 -- all of such patents being owned by the assignee of the instant invention and being incorporated by reference herein. Such scanners have generally been designed to operate at a certain working or reading distance from the symbol at a hand-held or stationary position.

Typically, a scanner includes a light source such as a laser or semiconductor device that generates a light beam. The use of semiconductor devices as the light source in scanner systems is especially desireable because of their small size, low cost and low power requirements. The light beam is optically modified, typically by a lens, to form a beam spot of a certain size. It is preferred that the beam spot size be approximately the same as the minimum width between regions of different light reflectivity, i.e. the bars and spaces of the symbol. The relative size of the bars and spaces is determined by the type of coding used, as is the actual size of the bars and spaces. The number of characters per inch represented by the bar code symbol is referred to as the density of the symbol.

The light beam is directed by optical components along a light path toward a target that includes a bar code symbol on the surface. A scanning component is also disposed in the light path. The scanning component may either sweep the beam spot across the symbol and trace a scan line across and past the symbol, or scan the field of view of the scanner or do both. A scanner also includes a sensor or photodetector. The photodetector has a field of view which extends across and slightly past the symbol and functions to detect light of variable intensity reflected off the symbol. The photodetector generates electrical signals representative of the sequences of bars and spaces in the symbol. The electrical signals are then decoded into data descriptive of the symbol.

Various types of electronic article surveillance systems are also known in the prior art. Such systems are used to prevent shoplifting and similar unauthorized removal of articles from a controlled area. More particularly, such systems provide a specially designed tag or label which is attached to the article. The tag or label contains active or passive electronic circuitry or a magnetic media which is responsive in a certain manner to an external electromagnetic field. When the article containing an activated tag or label is passed through a controlled exit, an alarm will be set off. In order to authorize the removal of the article from the control area, the tag or label must be either removed or deactivated by an authorized person. The present invention relates more particularly to surveillance systems that require deactivation of the tag, and to apparatus for deactivating a surveillance tag for authorized removal of the article from the controlled area.

In one surveillance system known in the prior art, sensor-emitter labels or tags contain a semiconductor diode and are applied to articles for the purpose of surveillance. For deactivating such tags, various devices are known in the prior art including, among others, radio frequency generators for burning out the diode. However, such generators are generally high powered and are coupled inductively to the tags by way of an R. F. field.

Another surveillance system involves the use of tags containing ferrite material that can be magnetized or demagnetized by a suitable magnetic field which alters the operating characteristic of the tag, therby deactivating the same. Such a system is disclosed in EP-A-0 112 493.

There are various devices known in the prior art for deactivation a surveillance tag. U.S. Patent no. 4,318,090 discloses a hand-held probe having spaced contacts that are arranged to be applied to and drawn along the surface or a surveillance tag that contains a diode. When the probe contacts engage exposed terminals of the diode, a high current is passed through the diode sufficient to destroy its conducting characteristics and thereby deactivate the tag. A similar system is disclosed in WO-A-87 04 283, wherein the current is inductively coupled into the label to deactivate said label. Also, it is known from DE-A-28 44 242, to deactivate a label by an over-current transmitted through the electromagnetic field of an antenna, the over-current fusing a conductor in a resonant circuit.

There are a few systems in the prior art which combine both bar code reading and deactivation of surveillance tags. U.S. Patent No. 4,141,078 discloses an automated library circulation control system for processing library books. The system includes at least one terminal having an optical reader for book identification, and an electromagnetic activator at each terminal for magnetizing and demagnetizing a magnetic strip in each book.

In operation, a book is placed in a book tray at each terminal, and a bar coded label on each book is read by an overhead optical scanner. The book is oriented in the book tray at the terminal with the label facing up and the spine of the book facing the front. The scanner reads a nine digit number on the label and generates signals representing the bar code which are thereupon transferred to a computer.

The electromagnetic activator is operable at about the same time (Col. 1, lines 58 and 59) to activate or deactivate the magnetic strip in the book. The activator is located under the book tray and is operative on command from the computer. Failure of a user to deactivate the strip before taking the book from the library will activate an alarm at the library exit.

Prior to the present invention there has not been a simple, easy-to-use hand-held laser scanning system which is also capable of deactivating a surveillance tag associated with the label being read by the scanner.

### SUMMARY OF THE INVENTION

### 1. Objects of the Invention.

It is an object of the invention to provide a device for reading bar code symbols which automatically deactivates a surveillance tag after it has been determined that the bar code symbol has been successfully read.

It is another object of the invention to provide a label or tag that includes coded indicia on the surface thereof that forms a part of a surveillance device or circuit which may be deactivated by the scanner.

It is yet another object of the invention to provide a device for reading coded indicia which is operable in a non-contact mode and which is also capable of deactivating a surveillance tag.

### 2. Features of The Invention.

Briefly, and in general terms, the present invention provides an apparatus for detecting indicia having portions of different light reflectivity such as bar code symbols on a label and for deactivating a surveillance tag associated with the label. More particularly, the apparatus includes a scanner for scanning a label containing a bar code symbol and a sensor having a field of view and operative for detecting at least a portion of light of variable intensity reflected off the label and for generating an electrical signal indicative of the detected light intensity. The apparatus further includes a processor for processing the electrical signal to determine whether the reflected light of variable intensity is indicative of the presence of a bar code symbol. An enabling signal may be generated if a symbol has been detected. The apparatus also functions to transmit a deactivating laser beam signal to the target so that a physical characteristic of the tag is changed so as to deactivate the tag.

Another aspect of the present invention is to provide a method for detecting indicia having portions of different light reflectivity such as bar code symbols on a label on a target and for deactivating a surveillance tag associated with the target including the steps of scanning a label containing a bar code symbol and detecting at least a portion of light of variable intensity reflected off the label with a sensor. An electrical signal is generated which is indicative of the detected light intensity. The electrical signal is to determine whether the reflected light of variable intensity is indicative of the presence of a bar code symbol. A deactivation signal is transmitted to the target in a timed relationship to the scanning step so that a physical characteristic of the tag is changed so that the tag is deactivated.

The novel features which are considered as charactersitic of the invention are set forth in particular in the appended claims. The invention itself, however, both as to its construction and its method of operation, together with additional objects and advantages thereof will be best understood from the following description of specific embodiments when read in connection with the accompanying drawings.

### BRIEF DESCRIPTION OF THE DRAWING

FIG. 1 is a side sectional view of a gun-shaped, narrow-bodied, embodiment of a laser-based portable scanning and deactivation aparatus in accordance with the present invention;
FIG. 2 is a partially broken-away, top sectional view of the embodiment of FIG. 1;
FIG. 3 is a rear sectional view as taken along line 3-3 of FIG. 1;
FIG. 4 is a front elevational view of the embodiment of FIG. 1;
FIG. 5 is a front perspective view of the FIG. 1 embodiment, on a smaller scale, that diagramatically shows the interconnection of the head to the remainder of the scanning system; and
FIG. 6 is a highly simplified perspective view of a point-of-sale system incorporating another embodiment of the present invention.

### DETAILED DESCRIPTION OF THE PREFERRED EMBODIMENTS

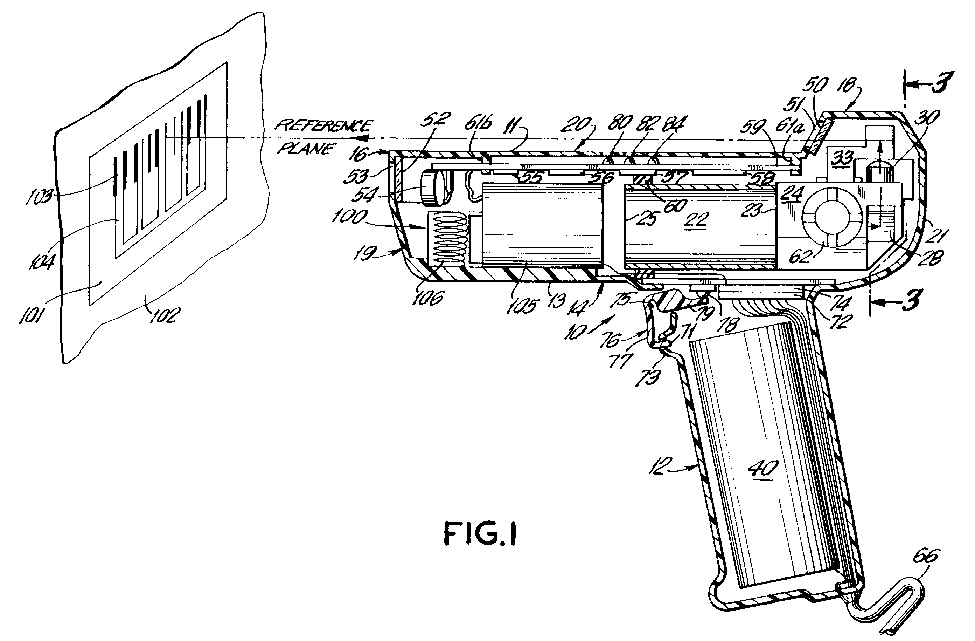

Referring now to FIGs. 1-5 of the drawing, reference numeral 10 generally identifies a light-weight, narrow-bodied, streamlined, narrow-snouted, hand-held, fully portable easy-to-manipulate, non-arm-and-wrist-fatiguing, laser scanning head supportable entirely by a user for use in a laser scanning system operative for reading, scanning and/or analyzing bar code symbols throughout the reading thereof, and further including deactivation apparatus for changing the state of a surveillance device associated with a tag or label on which the bar code symbol is provided.

Bar code symbols comprise a series of lines and spaces of varing widths, forming a pattern that decodes to a multiple character representing a number, letter or graphic symbol which defines a characteristic of the product or article bearing the symbol. Typical symbol bar codes in current use are the Universal Product Code (UPC), EAN Codabar and Code 39.

Turning now to FIG. 1, the head 10 includes a generally gun-shaped housing having a handle portion 12 and an elongated narrow-bodied barrel or body portion 14.

The handle portion 12 has a cross-sectional dimension and overall size such that it can conveniently fit in the palm of a user's hand. Both the body and handle portions are constituted of a light-weight, resilient shock-resistant, self-supporting material, such as a synthetic plastic material. The plastic housing is preferably injection molded, but can be vacuum formed or blow-molded to form a thin shell which is hollow and bounds an interior space whose volume measures less than a specific value of 50 cubic inches is not intended to be self-limiting, but has been provided merely to give an aproximation of the overall maximum volume and size of the head 10.

The body portion 14 is generally horizontally elongated along a longitudinal axis, and has a front region 16 at the front end, a raised rear region 18 at the rear end, and an intermediate body region 20 extending between the front and rear regions. The body portion 14 has a top wall 11 above which the raised rear region 18 projects, a bottom wall 13 below the top wall, a pair of opposed side walls 15, 17 spaced transversely apart of each other by a predetermined width-dimension, a front wall or nose 19, and a rear wall 21 spaced rearwardly of the front wall.

A light source means, i.e. laser tube 22 having an anode or output end 23 and a cathode or non-output end 25, is mounted within the body portion 14 lengthwise along the longitudinal axis, and operative for generating an incident collimated laser beam. In lieu of using a laser tube 22, a semiconductor laser may be used as the light source.

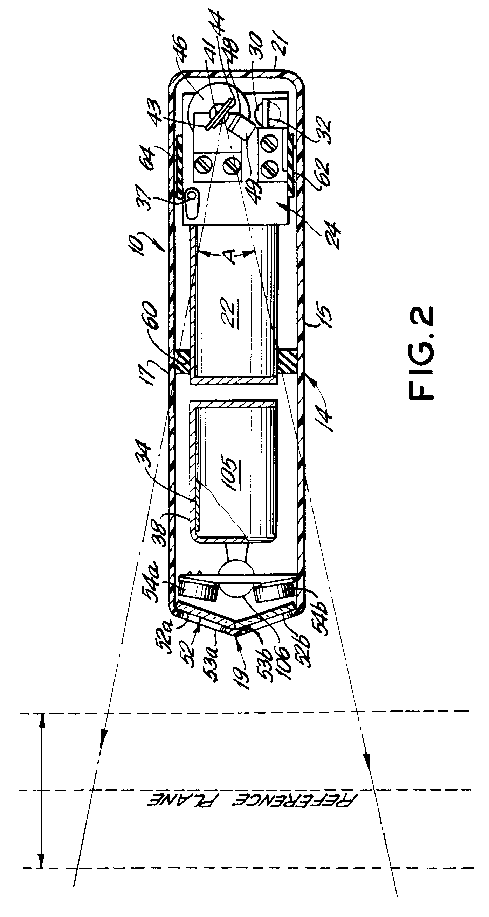

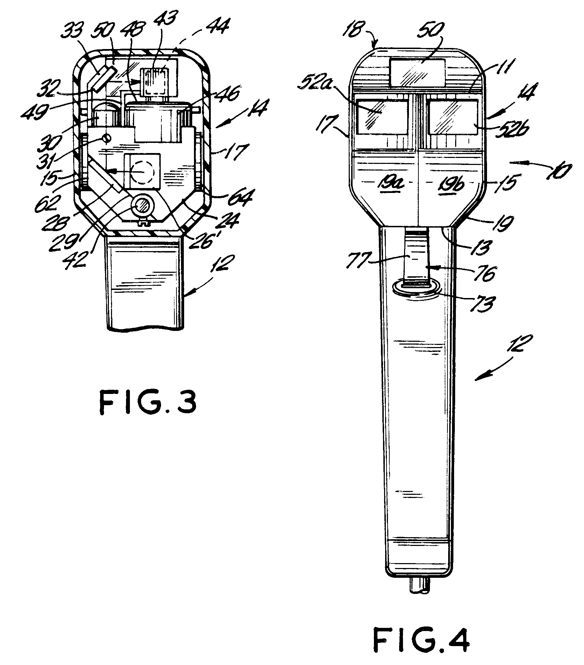

An optic means, i.e. an optic train, is likewise mounted within the body portion, and is operative for directing the incident beam along a light path towards a reference plane located exteriorly of the housing in the vicinity of the front region 16, as shown in FIGs. 1 and 2. A bar code symbol to be read is located in the vicinity of the reference plane, that is, anywhere within the depth of focus of the incident beam as described below, and the light reflected from the symbol constitutes a reflected laser beam which is directed along a light path away from the reference plane and back towards the housing. As best shown in FIGs. 3. The optic train is fixedly mounted in a cylindrical bore of an optical bench 24. A light-reflecting mirror 26′ which is fixedly mounted on an inclined surface of the bench, another light-reflecting mirror 28 which is fixedly mounted on another inclined surface 29 of the bench, a positive or convex lens 30 which is adjustably mounted on the bench by means of a set screw 31, and still another light-reflecting mirror 32 which is adjustably mounted on a bendable metal bracket 33. The bench 24 is a one-piece light-weight part machined or preferably molded by inexpensive mass-production techniques of a dimensionally stable, flame-retardant material, such as Delrin TM, or glass-filled Noryl TM, preferably having a high dielectric breakdown (on the order of 500 volts/mil). In order to take into account the slight variations in beam alignment which unavoidably result from different tubes and from tolerance variations in the tube itself, all elements in the optical path are made large enough to allow the beam to pass unobstructedly even if the beam is not exactly on center. This provides the advantage that the bench can be inexpensively mass-produced with practical tolerances.

Thus the beam emitted from the output end 23 first passes through the negative lens 26 which functions to diverge the initially collimated beam. Then, the divergent beam impinges the mirror 26′, and is thereupon reflected laterally to impinge the mirror 28, whereupon the beam is reflected upwardly to pass through the positive lens 30 which is operative to converge the divergent beam to a generally circular spot of approximately an 8 mil to 10 mil diameter at the reference plane.

The converging beam from the lens 30 impinges on the ajustable mirror 32, and is thereupon laterally reflected to a scanning mirror 44 which forms part of the scanning means.

The scanning means is preferably a high-speed scanner motor 46 of the type shown and described in U.S. Pat. No. 4,387,297, assigned to the same assignees as the present application. The entire contents of said patent are incorporated herein by reference and made part of this application. For purposes of this application, it is sufficient to point out that the scanner motor 46 has an output shaft 41 on which a support plate 43 is fixedly mounted. The scanning mirror 44 is fixedly mounted on the plate 43. The motor 46 is driven to reciprocally and repetitively oscillate the shaft in alternate circumferential directions over arc lengths of any desired size, typically less than 360 degrees, and at a rate of speed on the order of a plurality of oscillations per second. In a preferred embodiment of this invention, the scanning mirror 44 and the shaft are jointly oscillated so that the scanning mirror repetitively sweeps the beam impinging thereon through an angular distance A or an arc length of about 25 degrees and at a rate of about 40 oscillations per second.

Stop means, i.e., an abutment 48, is fixedly mounted on a bracket 49 which is, in turn, mounted on the bench 24. The abutment 48 is located in the path of oscillating movement of the plate 43 for the scanning mirror 44, for preventing the mirror from making a complete 360 degree rotation during shipping. The abutment never strikes the mirror during scanning; the abutment serves to keep the mirror properly aligned, that is, always facing towards the front head.

The scanning motor 46 is mounted on the bench 24 slightly offset from the longitudinal axis. Other miniature scanning elements can be utilized. For example, miniature polygons driven by motors can be used, or the various bimorph scanning oscillation elements described in U.S. Pat. No. 4,251,798 can be used, or the penta-bimorph element described in U.S. Pat. No. 4,387,2907 can be used, or the miniature polygon element described in U.S. Pat. No. 4,369,361 and assigned to the same assignee as the present application, the entire contents of which are hereby incorporated herein by reference and made part of this disclosure, can be used. Although only a single scanner element is shown in the drawing for cyclically sweeping the laser beam across the symbol along a predetermined direction (X-axis scanning) lengthwise, thereof, will be understood that another scanner element may be mounted in the head for sweeping the symbol along a transverse direction (Y-axis scanning) which is substantially orthogonal to the predetermined direction. In some applications, multiple line scanning is preferred.

Referring again to FIGs. 1 and 2, the scanning mirror 44 is mounted on the light path of the incident beam at the rear region 18 of the head, and the motor 46 is operative for cyclically sweeping the incident beam through an angular distance A over a field of view across the bar code symbol located in the vicinity of the reference plane. A laser light-transmissive scan window 50 is mounted on the raised rear region 18, behind an opening 51 formed therein in close adjacent confronting relationship with the scanning mirror 44 thereat. As used throughout the specification and claims herein, the term "close adjacent confronting" relationship between components is defined to mean that one component is proximally located relative to the other component, typically less than one inch apart of each other. As shown in FIG. 1, the scan window 50 is configured and positioned in the light path of the incident beam to permit the latter coming from the scanning mirror 44 to travel a distance of less than one inch within the raised gear region 18 , and then to pass through the scan window 50, and thereupon to travel unobstructedly and exteriorly of and past the intermediate body region 20 and the front region 16 of the housing, and then to impinge on the symbol 103 located at or near the reference plane.

The closer the scanning mirror 44 is to the scan window 50, the larger will be the field of view of the swept incident beam for a given scan angle. It will be noted that the width dimension of the scan window represents a limiting factor of the sweep of the incident beam, because the housing walls bounding the scan window would clip and block any beam which was swept beyond the width of the scan window. Hence, as a rule, the scanning mirror is made as close as possible to the scan window to optimize the field of view of the swept incident beam.

We turn next to the surveillance tag deactivator of the present invention. As we have noted above, various types of electronic article (EAS) surveillance systems are known. Such systems are used for a variety of applications, such as preventing shoplifting and similar unauthorized removal of articles from a controlled area. More particularly, such systems provide a specially designed tag or label which is attached to the article. The tag or label contains active or passive electronic circuitry or a magnetic media which has at least two states: an active state and a deactivated state. The tag is designed to be responsive in a certain manner to the presence of an external electromagnetic field. The system is designed so that when the article containing a tag or label in the activated state is passed through a controlled exit, an alarm will be set off. If the tag or label is deactivated, no alarm will be triggered, and the article may be removed from the control area. In order to authorize the removal of the article from the control area, the tag or label must be either removed or deactivated by an authorized person. The present invention relates to surveillance systems that require deactivation of the tag, and more particularly to apparatus for deactivating a surveillance tag for authorized removal from the area.

From a marketing standpoint, there are three basic technologies that may be used in a disposable EAS tag: magnetic, intermediate RF, and microwave. The magnetic technique is believed the least reliable and works to about three feet although such system are operable at 10 times lower power than other configurations. The intermediate RF band is workable to about six feet. The microwave technique is useful at the twelve to fifteen foot range, suitable for the exits required for large department stores.

In one surveillance system, sensor-emitter labels or tags contain a semiconductor diode and are applied to articles for the purpose of surveillance. For deactivating such tags, various devices are known in the prior art including, among others, radio frequency generators for burning out the diodes. However, such generators are generally high powered and are coupled inductively to the tags by way of an RF field.

Another surveillance system involves the use of tags containing ferrite material that can be magnetized or demagnetized by a suitable external magnetic field. When the tag is moved into the magnetic field, the field alters the operating characteristic of the tag, thereby deactivating it. Note that a simple ferrite magnet is adequate to deactivate a magnetic tag by rebiasing a tag in its loop.

Another type article surveillance system is based on surface acoustic wave technology. Such systems include a tag with a tiny chip made of lithium niobate, a remote interrogation unit and reader that includes a radio frequency transceiver, and a computer interface unit to perform signal processing, multiplexing and communications to a host computer.

Lithium niobate is extremely efficient in the conversion of electromagnetic energy (from the radio signal) into surface acoustic waves. A high resolution photolithographic masking process may be used to create individual codes so that numerous individualized tags may be manufactured. When the radio waves strike the tag, a phase modulated signal is sent back to the reader that carries the equivalent of a binary number of up to 28 bits or more.

The small, lightweight tag can be configured in many different ways, making it easy to attach or insert in a variety of objects. The tag is also reusable, reliable and inexpensive. One of the main advantages of a lithium niobate tag is that it can be read through any non-conductive substance such as wood, concrete and asphalt. Another superior feature is its reading range, which can be up to six feet.

The interrogation unit continually transmits a 915 MHz radio frequency signal at a power of one to three milliwatts. This very low power signal is used to excite a lithium niobate crystal in the tag, which has no power of its own, but does have a small antenna. The excitation of the crystal creates a surface acoustic wave effect that alters the original signal in a manner unique for each tag. This now unique signal is echoed back and received by the reader, which passes it to tie computer interface. The computer interface decodes the signal, changes it from analog to digital, and sends it to the host computer.

Still another surveillance system utilizes a light sensitive element or switch in the tag. The device transmitting a deactivating signal generates a laser light beam which functions to deactivate the tag or label by changing the state of a semiconductor component disposed in the label in the path of the light beam.

The laser light beam may be the same beam as the scanning beam. The device on the tag may take a variety of different structures: it may be a switch, such as the Auston switch, or may be a transistor device, such as a FET. The light beam may "blind" the FET so as to switch it into another state, representing a deactivated state.

Another embodiment of the tag is to utilize the latch up effect found in CMOS semiconductor devices. The latch up effect is normally considered a disadvantage of such devices and various circuit techniques have been employed in order to overcome such an effect. When a semiconductor device is latched up it remains in a single state because of the presence of charge carriers in a circuit element of the device. The same effect can be utilized to an advantage in an EAS tag allowing the laser beam or external electric field to cause the semiconductor device to latch up. Once the device is latched up, the EAS tag may be considered deactivated and no subsequent exposure to additional laser light or external field will change the state back to an activated state.

Another embodiment of the surveillance tag according to the present invention is a laser-activated microwave semiconductor device. The device consists essentially of back-to-back metal/thin oxide/silicon (MTOS) capacitors on a silicon chip.

Light from a laser (which may be a semiconductor laser) associated with the scanner would be directed at the surveillance tag. The light would be absorbed through the thinned areas of the aluminum electrodes of the capacitors (The aluminum is less than 10 nm thick in these areas.) A layer of silicon dioxide about 10 nm thick under the electrodes provides a large capacitance per unit area, and this capacitance is coupled to the capacitance of the depletion layer in the silicon beneath the oxide. The oxide is thick enough to be nonconducting at voltage below 7 volts on one capacitor.

Operation of the device is based on the change in carrier-generation rate in the depletion layer caused by illuminating the MTOS capacitors. When illuminated by the laser, the depletion layer generates enough carriers to become conducting; the path between capacitor electrodes turns on very raevel (equal to the product of the voltage and the depletion layer capacitance). When the device is illuminated with a laser pulse, the capacitance increases to one-half the capacitance of the oxide layer, which is quite large. The charge increases proportionately, creating a current pulse along a strip line on the chip surface.

The capacitors can also be made to function as capacitively-coupled back-to-back photodevices. In this mode of operation, the device responds to low light levels with an estimated pulse response of 45 ps full width at half maximum.

It is to be understood, that the present invention relates to deactivation of a tag or label by means of a laser beam, whereas deactivation by means of electro-magnetic fields or currents represents prior art. The deactivating module 100 is shown in the head 10 in Figure 1. When enabled, the deactivating module will transmit a signal to the tag 101 which will change a physical characteristic of the tag so that the tag is deactivated and the purchaser or the article 102 is able to remove the article 102 from the controlled premises without setting oft an alarm. In the figure, an embodiment of the tag 101 is shown in which the bar code symbol 103 actually forms a part of the portion or the tag that is responsive to the transmitted signal, i.e. finger-like structure representing an antenna or circuit in the tag. Further examples of circuitry on the tag 101 will be described subsequently.

The operation of the optical scanning device in conjunction with a deactivation module in a retail application may be described as follows. The article to be purchased is presented to the check-out station with the label 101 facing the scanner 10. The sales clerk positions the article 102 so that the scanner is able to read a bar code symbol 103 on the label. The scanner generates signals representing the data or information represented on the symbol which is then transferred to the computer 70.

The deactivating module 100 is represented in FIG. 1 in highly diagrammatic form as including a control circuit 105 and an antenna 106. In the embodiment shown in FIG. 1, it is assumed that the tag is deactivated by generation of a radio frequency field, such as would be generated by the antenna 106. The control circuit 105 is preferably coupled to the signal processing means 55 which processes the analog signal generated by the sensor means 54 to determine if a bar code symbol has been detected. There are various approaches to enabling the deactivating module, depending on whether or not a valid bar code signal has been detected.

The signal processing means 55 may process the electrical signal to determine whether the reflected light of variable intensity is indicative of the presence of a predetermined indicia pattern such as a bar code symbol. The signal processing means 55 may further include means for generating an enable signal when the reflected light of variable intensity is indicative of the presence of predetermined indica pattern such as a bar code symbol. A deactivating signal will be transmitted to the label in response to the enable signal.

The deactivation of a surveillance tag may take any number of forms, and depending on the type of tag, the deactivation signal changes some physical aspect of the tag which deactivates it. U.S. Patent No. 4,318, 090 is herein incorporated by reference to describe one embodiment of a specific type of tag 101 and the technical procedure utilized in changing a state of the tag. Of course, other types of tags and other surveillance systems are also within the scope of the present invention.

For example, one simple surveillance system utilizes a tag containing a magnetic stripe. The magnetic stripe is demagnetized when the article is charged or checked out. Deactivation of the stripe occurs on command from the computer 70 after it is determined that the check-out has been authorized. Failure of the user to deactivate the stripe before taking the article from the controlled area will initiate an alarm at the exit. More sophisticated surveillance systems will provide a unique code for each article or class of articles so that the detection system will actually be able to identify the article. Such sophisticated systems may also include software which enables verification and confirmation messages to be printed or displayed by an on-line printer or display to enable the checkout clerk to authorize the transaction. In special applications, such as a rental agency or library, the print out message may include the user's identification or credit card number, the description of the article or item rented, the date charged, and the date due. If a reservation has been made the display will verify the reservation by user identification number, the article or item reserved and the date that the reservation or hold request was entered.

One approach is to process the electric signal generated by the sensor means 54 to determine whether the reflected light represents a bar code, a specific category or class of bar codes, or even a bar code with a specific code. A description of the signal processing means 55 will be presented in detail at a later point. If a bar code symbol is detected (or other predetermined criteria is satisfied), an enabling signal will be generated by the signal processing means 55 and applied to the control circuit 105. The control circuit switches current into the antenna 106 in response to the enabling signal, thereby generating a radio frequency field which, when placed sufficiently close to the tag 101, will deactivate the tag 101.

Returning to the description of the scanning component of the present invention, as best shown in FIG. 2 the field of view of the swept incident beam is substantially independent of the width of the body portion 14 and, in fact, the field of view, i.e., the transverse beam sweep dimension, of the swept incident beam is actually larger than the width of the body portion 14 at the front region 16 and at the forward section of the intermediate body region 20. This is, of course, enabled by the fact that the swept incident beam has been transmitted outside of the front and intermediate body regions of the housing. The side walls 15,17 are not in the light path and do not clip or block the swept incident beam. The scan window 50 is mounted on the rear region 18 at an elevation above the top wall 11 to permit an overhead unobstructed transmission.

In a preferred embodiment, the reference plane is located about 2 inches from the front wall 19 of the head, and is located a linear distance of about 9 1/2 inches from the positive lens 30. The depth of field at the reference plane is about 2 3/4" on either side of the reference plane. These numerical figures are not intended to be self-limiting, but are merely exemplary.

A laser light-transmissive non-scan window 52 is mounted on the front wall 19 in close adjacent confronting relationship with the sensor means 54 located at the front region 16. The sensor means 54 is operative for detecting the intensity of the light in the reflected beam coming from the symbol over a field of view across the same, and for generation an electric analog signal indicative of the detected light intensity. In order to increase the zone of coverage of the sensor means, a pair of sensor elements or photodiodes 54a, 54b are located on opposite sides of the longitudinal axis. The sensor elements lie in intersecting planes and face both forwardly and laterally. The front wall 19 is likewise constituted at a pair of tapered wall ports 19a, 19b, each of which has an opening 53a, 53b formed therein. A pair of non-scan window portions 52a, 52b is fixedly mounted behind the openings 52a, 52b, respectively. Each non-scan window portion is mounted in close adjacent confronting relationship with its respective sensor element. The non-scan window portions are configured and positioned in the light path of the reflected beam to permit the latter to pass therethrough to the sensor elements. Two small non-scan window portions are preferably utilized, rather than a single non-scan window, because two smaller windows are inherently stronger than one due to the greater perimeter that two windows provide.

The scan window 50 is located rearwardly of the non-scan window 52. Each window 50, 52 is located at a different distance from the reference plane and the front wall 19. The scan window 50 is elevated above the non-scan window 53 as described above. The non-scan window portions are located at opposite sides of the longitudinal axis. The scan window is located on the logitudinal axis.

A printed circuit board 59 is mounted within the body portion 14, and various electrical sub-circuits diagrammatically represented by reference numerals 55, 56, 57, 58 are provided on the board 59. Signal processing means 55 is operative to process the analog signal generated by the sensor to a digitized signal to generate therefrom data descriptive of the bar code symbol. Suitable signal processing means for this purpose was described in U.S. Pat. No. 4,251,798. Sub-circuit 56 constitutes drive circuitry for the scanner motor 46. Suitable motor drive circuitry for this purpose was described in U.S. Pat. No. 4,387,297. Sub-circuits 57 and 58 constitute a safety circuit for the laser tube, and voltage regulator circuitry. Suitable circuitry for this purpose was also described in U.S. Pat. No. 4,387,297.

Shock mounting means are mounted at the front and rear regions of the body portion, for shock mounting the laser, optical and scanning components within the body portion. An annular shock collar 60 preferably of rubber material, surrounds the forward end of the tube 22 and engages the bottom wall 13 and the underside of the circuit board 59. Board support elements 61a, 61b, extend downwardly of the top wall 11 rigidly support the circuit board 59. A pair of rubber shock mounts 62, 64 are fixedly mounted on opposite sides of the optical bench 24, and respectively engage the side walls 15, 17 at the rear region 18 of the housing. The shock mounts 62, 64 and the collar 60 are spaced longitudinally apart of each other and engage the thin-walled housing at three spaced locations to isolate twisting of the housing from the laser, optical and scanning components.

Electrical power is supplied to the laser tube 22 and the deactivation module 100 by the power supply component 40 mounted within the handle portion 12. The power supply component which steps up a 12 DC battery voltage to over 1 kilovolt is the heaviest component in the head, and its mounting in the handle portion allows for a low center of gravity and for better balance of the head. In the embodiment in which a semiconductor laser is used, such a massive power supply component would not be necessary.

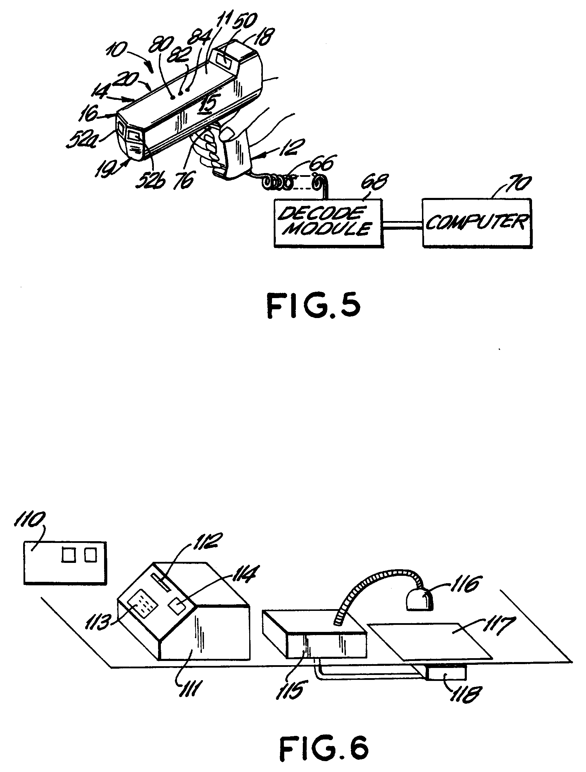

A non-bulky, collapsible, coil-type cable 66 (see FIG. 5) electrically connects the head 10 to the remainder of the scanning system, which includes a battery-powered decode module 68 and a host computer 70. The coil-type cable 66 is readily flexible and permits user manipulation of the head 10 with multiple freedoms of movement from one symbol to the next without requiring excessive strength by the user. The cable 66 includes a plurality of conductive wires which are all relatively thin and flexible. For example, one wire carries the 12 v DC low voltage signal from the battery in the decode module 68 to the power component 40. Another wire carries the digitized signal from the analog-to-digital signal processing circuitry 55 to the decode module 68 for decoding purposes. This latter wire is non-radio-frequency-shielded, and hence is readily flexible. The remaining wires carry low voltage control and communication signals. All of the wires of the cable 66 are connected together to a common plug-type connector 72. A mating connector 74 is mounted within the head and receives the connector 72 in a mating relationship The use of the mating connectors 72, 74 permits rapid replacement of the cable for on-site repairs. The electrical connections between the connector 74 and the various components in the head have been omitted from the drawing for the sake of clarity.

As shown in Figure 5, the decode module 68 processes the digitized signal generated in the head, and calculates the desired data e.g., the multiple digit representation or code of the bar code symbol, in accordance with an algorithm contained in a software program. The decode module 68 includes a PROM for holding the control program, a RAM for temporary data storage, and a microprocessor which controls the PROM and RAM and does the desired calculations. The decode module also includes control circuitry for controlling the actuatable components in the head as described below, as well as two-way communications circuitry for communicating with the head and/or with the host computer 70. The host computer 70 is essentialy a large database, and provides information for the decoded symbol. For example, the host computer can provide retail price information corresponding to the decoded symbols.

A manually-actuatable trigger switch 76 is mounted on the head in the region where the handle portion 12 is joined to the body portion 14. Depression of the trigger switch 76 is operative to turn the microprocessor in the decode module on. Upon release of the trigger switch, the spring 78 restores the switch to its initial position, and the microprocessor is turned off. In turn, the microprocessor is electrically connected to the actuatable components in the head via the cable 66 to actuate and deactuate the actuatable components when the microprocessor is respectively turned on or off by the trigger switch.

The trigger switch turns the microprocessor on or off and, may also be used to turn all of the actuatable components in the head on or off, including the deactivating module 100. Thus, deactivation of the tag in such an embodiment may be achieved by depressing the trigger. The microprocessor is a large power drain on the battery built in the the decode module. Hence, by controlling the on-time of the microprocessor to only those times when a symbol is being read, that is, when the trigger switch is depressed, the power drain is substantially reduced, and the battery life substantially increased (over 5 hours).

Another feature of this invention is embodied in turning the microprocessor on or off by means of the host computer 70 which is remote from the head 10. The computer 70 typically includes a keyboard and a display. Once a user makes an entry on the keyboard, for example, by entering the identity of the code to be decoded, the computer requests the microprocessor to turn itself on, store the information, and then to turn the microprocessor off. The microprocessor, again is only on for so long as is necessary to comply with the computer request. The trigger switch and the keyboard computer entry are independently operable means for directly controlling the actuatable components in the head.

Another useful feature in having the microprocessor, rather than the trigger switch, directly control the laser tube is to keep an accurate record of laser on-time for government record keeping. It is, of course, far easier to keep track of laser on-time in the software of a microprocessor than to manually record the laser on-time.

A set of visual indicators or lamps 80, 82, 84 is also mounted on the circuit board 59, each lamp being positioned below a corresponding opening in the top wall 11. The lamps are operative to visually indicate to the user the status of the scanning system. For example, lamp 80 illuminates whenever the laser tube is energized, thereby continuously advising the user whether the tube is on or off. Lamp 82 illuminates when a successful decode has been obtained. It will be recalled that the incident beam is swept over a symbol at a rate of about 40 scans per second. The reflected beam may be successfully decoded on the first scan, or on any of the successive scans. Whenever a successful scan has been obtained, the microprocessor will cause the lamp 82 to be illuminated to advise the user that the head is ready to read another symbol. Lamp 84 may be illuminated when a successful tag deactivation has occured, such as indicated by a return signal from the tag.

It is believed that the operation of the scanning system is self-evident from the foregoing, but by way of brief review, the gun-shaped head is grasped by its handle portion, and its barrel is aimed at the bar code sybmol to be read. The sighting of the symbol is facilitated by the fact that the barrel is narrow-bodied, and that there are no obstructions on the front and intermediate body regions of the barrel. The front wall of the barrel is situated close to the symbol, it being understood that the symbol can be located anywhere in the depth of field at either side of the reference plane.

The trigger switch is then depressed, thereby causing the microprocessor to energize the laser tube, the scanner motor, the sensor elements, and all the electronic circuitry provided on the printed circuit board. The laser tube emits a beam which is then routed through the optic train as described above, and thereupon, the scanning mirror reflects the beam through the scan window and out of the head exteriorly of and past the front and intermediate body regions of the body portion of the head. The reflected beam passes through the non-scan window portions to the sensor elements and is subsequently processed by the signal processing circuitry. The processed signal is conducted to the decode module for decoding, Once a successful decode has been realized, the microprocessor illuminates the lamp 82 and deactuates the head. Once the tag has been deactivated, the lamp 84 will illuminate. The user is now advised that the head is ready to be aimed at another symbol. The flexibility of the coil-type cable facilitates the movement of the head to the next symbol.

In addition, the movement of the head from one symbol to the next is facilitated by the relatively low weight of the head. The head with all the aforementioned components therein weighs less than one pound. This represents a significant breakthrough in the art of miniaturized and portable scanning heads.

Figure 6 illustrates another embodiment of the present invention in a point-of-sale terminal that includes a table-top directional optical scanner for multidirectionally scanning a light-reflecting target, such as an article including a bar code symbol on the surface. The articles are placed on a table-top within the field of view of a detector and a multidirectional scan pattern is generated that reads the randomly-oriented bar code symbols.

The figure shows a point-of-sale terminal 111 including a card reader 112, a keyboard 113, and display 114. A scanner including a base 115 and a scanning head 116 is coupled to the terminal 111 and functions to read bar code symbols on articles placed on field of view plane 117. A credit card or "smart card" 110 may also be used in connection with the terminal 111 so that the customer's purchases as read by the scanning head 116 may automatically paid by credit card or cash card. The system further includes a deactivation unit 118 which is coupled to the base 115 of the scanning head 116.

Although the embodiment shown in Figure 6 is a table-top type scanning/deactivation unit, it may also be implemented in the form of a mobile shopping cart. In such embodiment, which is not shown in the drawing, the customer would wheel the cart through a merchandise, inventory, or material area. Upon selecting specific merchandise, the customer would scan the label, thereby deactivating it and meanwhile keeping a running tally of the amount charged.

As an example, consider the following technique. To charge a article to be purchased, a patron inserts his credit card into the reader 112 to be automatically read and verified against a data base containing the number of all valid account numbers. If the credit card number is not found in the file, the transaction will not proceed and the alphanumeric display unit 114 advises the user to consult with the customer. In the case of a mobile shopping cart embodiment, deactivation will not occur and the customer is removing merchandise. In any of these cases, a switch may be employed so that an authorized person has the capability to override the transaction if desired.

It will be understood that each of the elements described above, or two or more together, also may find useful application in other types of constructions differing from the types described above.

In all of the various embodiments, the elements of the scanner may be assembled into a very compact package that allows the scanner to be fabricaed as a single printed circuit board or integral module. Such a module can interchangeably be used as the laser scanning element for a variety of different types of data acquisition systems. For example, the module may be alternately used in a hand-held scanner, a table top scanner attached to a flexible arm or mounting extending over the surface of the table or attached to the underside of the table top, or mounted as a subcomponent or subassembly of a more sophisticated data acquisition system.

The module would advantageously comprise a laser/optics subassembly mounted on a support, a scanning element such as a rotating or reciprocating mirror, and a photodetector component. Control or data lines associated with such components may be connected to an electrical connector mounted on the edge or external surface of the module to enable the module to be electrically connected to a mating connector associated with other elements of data acquisition system.

An individual module may have specific scanning characteristics associated with it, e.g. operability at a certain working distance, or operability with a certain density of symbols. The scanning characteristics may also be defined through the manual setting of control switches associated with the module. The user may also adapt the data acquisition system to scan different types of articles or the system may be adapted for different applications by interchanging modules on the data acquisition system through the use of the simple electrical connector.

The scanning module described above may also be implementing within a self-contained data acquisition system including one or more such components as keyboard, display, data storage, application software, and data bases. Such a system may also include a communications interface to permit the data acquisition system to communicate with other components of a local area network or with the telephone exchange network, either through a modem or an ISDN interface, or by low power radio broadcast from the portable terminal to a stationary receiver.

## Claims

1. Apparatus (10) for a system for reading bar code symbols and for electronically monitoring articles including a surveillance tag or label having an activated and a deactivated state, said apparatus normally being portable only by a user throughout the reading of the symbols and comprising:
(a) means (22,24,44,46) for scanning a label containing a bar code symbol;
(b) sensor means (54) having a field of view and operative for detecting at least a portion of light of variable intensity reflected off the label and for generating an electrical signal indicative of the detected light intensity;
(c) means (55,68,70) for processing said electrical signal to determine whether the reflected light of variable intensity is indicative of the presence of a predetermined indicia pattern such as a bar code symbol; and
(d) means for transmitting a deactivating signal to said tag or label so as to change the state of the tag from an activated to a deactivated state, characterized in that
said means for transmitting a deactivating signal comprises means for generating a laser light beam which functions to deactivate said tag or label by changing the state of a semiconductor component disposed in the tag or label in the path of said light beam.

2. A method for detecting indica having portions of different light reflectivity such as bar code symbols on a label associated with an article and for deactivating a surveillance tag associated with the label and the article comprising the steps of:
(a) scanning a label containing a bar code symbol;
(b) detecting at least a portion of light of variable intensity reflected off the label with a sensor and generating an electrical signal indicative of the detected light intensity;
(c) processing said electrical signal to determine whether the reflected light of variable intensity is indicative of the presence of a predetermined indicia pattern such as a bar code symbol; and
(d) transmitting a deactivating signal to said tag so that a physical characteristic of said tag is changed so as to deactivate the tag, characterized in that
said step of transmitting a deactivating signal comprises transmitting a laser beam to a light sensitive electronic element disposed on the surface of said surveillance tag.

3. A method as defined in claim 2, wherein said step of processing said electrical signal to determine whether the reflected light or variable intensity is indicative of the presence of predetermined indica pattern such as a bar code symbol further comprises the step of generating an enabling signal if a symbol has been detected; and said step of transmitting a deactivating signal to said target is reponsive to said enabling signal so that a physical characteristic of said tag is deactivated.

4. A method as defined in claim 2, wherein said step of scanning a label comprises the steps of:
(a) providing means (22) for illuminating said label with a laser beam; and
(b) directing said laser beam along an optical path toward the label so as to scan spatially adjacent portions of the label.

5. A method as defined in claim 2 or 3, wherein said step of transmitting a deactivating signal changes the characteristic of a diode disposed in said surveillance tag.

6. A point-of-sale checkout system for reading bar code symbols and for electronically monitoring articles including a surveillance label having an activated and a deactivated state including a bar code symbol comprising:
(a) means (22,24,44,46) for scanning a label containing a bar code symbol;
(b) sensor (54) means having a field of view and operative for detecting at least a portion of light of variable intensity reflected off the bar code symbol on the label and for generating an electrical signal indicative of the detected light intensity;
(c) means (55,68,70) for processing said electrical signal to generate a data representation associated with the bar code symbol being scanned;
(d) means (114) for displaying said data representation to enable the customer to compare the data representation with the article; and
(e) means for transmitting a deactivating signal to said label so as to change the state of the label from an activated to a deactivated state, characterized in that
said means for transmitting a deactivating signal comprises means for generating a laser light beam which functions to deactivate said label by changing the state of a semiconductor component disposed in the label in the path of said light beam.

7. A system as definied in claim 6, further comprising means (55) for processing said electrical signal to determine whether the reflected light of variable intensity is indicative of the presence of a predetermined indicia pattern such as a bar code symbol.

8. A system as defined in claim 6, further comprising means (55) for generating an enable signal when the reflected light of variable intensity is indicative of the presence of predetermined indica pattern such as a bar code symbol, and for transmitting deactivating signal to said label in response to said enable signal.

9. A system as defined in claim 6, wherein said means (22,24,44,46) for scanning a label comprises:
(a) means (22) for illuminating said label with a laser beam; and
(b) means (44,46) for directing said laser beam along an optical path toward the label so as to scan spatially adjacent portions of the label.

10. A system as defined in claim 6, wherein said label comprises means for transmitting a return signal to the checkout system.

11. A system as defined in claim 6, wherein said label comprises a light sensitive electronic element responsive to said laser beam to change from an activated to a deactivated state.

## Patentansprüche

1. Vorrichtung (10) für ein System zum Lesen von Strichcodesymbolen und zum elektronischen Überwachen von Artikeln, die einen Überwachungsanhänger oder ein Überwachungsetikett aufweisen, welches einen aktivierten und einen deaktivierten Zustand besitzt, wobei die Vorrichtung normalerweise nur durch einen Verwender während des gesamten Lesens der Symbole tragbar ist und folgendes aufweist:
(a) Mittel (22, 24, 44, 46) zum Scannen eines Etiketts, das ein Strichcodesymbol enthält;
(b) Sensormittel (54), die ein Sichtfeld besitzen und betriebsmäßig vorgesehen sind zum Detektieren von mindestens einem Teil von Licht mit variabler Intensität, das von dem Etikett reflektiert wird, und zum Erzeugen eines elektrischen Signals als Anzeige für die detektierte Lichtintensität;
(c) Mittel (55, 68, 70) zum Verarbeiten des elektrischen Signals, um zu bestimmen, ob das reflektierte Licht der variablen Intensität eine Anzeige bildet für das Vorhandensein eines vorbestimmten Indizien- oder Kennzeichnungsmusters, wie beispielsweise eines Strichcodesymbols; und
(d) Mittel zum Übertragen eines deaktivierenden Signals zu dem Anhänger oder Etikett, um den Zustand des Anhängers von einem aktivierten in einen deaktivierten Zustand zu ändern,
dadurch **gekennzeichnet,** daß die Mittel zum Übertragen eines deaktivierenden Signals Mittel aufweisen zum Erzeugen eines Laserlichtstrahls, der funktioniert zum Deaktivieren des Anhängers oder Etiketts durch Ändern des Zustandes einer Halbleiterkomponente oder eines Halbleiterbauteils, die bzw. das in dem Anhänger oder Etikett in dem Pfad des Lichtstrahls angeordnet ist.

2. Verfahren zum Detektieren oder Abfühlen von Indizien oder Kennzeichnungen, die Teile mit unterschiedlichem Lichtreflexionsvermögen besitzen, wie beispielsweise Strichcodesymbole auf einem Etikett, das mit einem Artikel assoziiert ist, und zum Deaktivieren eines Überwachungsanhängers, das mit dem Etikett und dem Artikel assoziiert ist, wobei das Verfahren die folgenden Schritte aufweist:
a) Scannen eines Etiketts, das ein Strichcodesymbol enthält;
(b) Detektieren von mindestens einem Teil des Lichts mit variabler Intensität, das von dem Etikett reflektiert wird, und zwar mit einem Sensor und Erzeugen eines elektrischen Signals als Anzeige für die detektierte Lichtintensität;
(c) Verarbeiten des elektrischen Signals, um zu bestimmen, ob das reflektierte Licht mit der variablen Intensität eine Anzeige bildet für das Vorhandensein eines vorbestimmten Indizien- oder Kennzeichnungsmusters, wie beispielsweise einem Strichcodesymbol; und
(d) Übertragen eines deaktivierenden Signals zu dem Anhänger, so daß eine körperliche oder physikalische Eigenschaft des Anhängers verändert wird, um den Anhänger zu deaktivieren,
dadurch **gekennzeichnet,** daß der Schritt des Übertragens eines deaktivierenden Signals die Übertragung eines Laserstrahls auf ein lichtempfindliches elektronisches Element umfaßt, das auf der Oberfläche des Überwachungssanhängers angeordnet ist.

3. Verfahren gemäß Anspruch 2, wobei der Schritt des Verarbeitens des elektrischen Signals, um zu bestimmen, ob das reflektierte Licht mit der variablen Intensität eine Anzeige bildet für das Vorhandensein eines vorbestimmten Indizien- oder Kennzeichnungsmusters, wie beispielsweise eines Strichcodesymbols, ferner den folgenden Schritt aufweist: Erzeugen eines Freigabesignals, wenn ein Symbol detektiert worden ist; und wobei der Schritt des Übertragens eines deaktivierenden Signals zum dem Ziel auf das Freigabesignal ansprechend ist, so daß eine körperliche oder physikalische Eigenschaft des Anhängers deaktiviert wird.

4. Verfahren gemäß Anspruch 2, wobei der Schritt des Scannens eines Etiketts die folgenden Schritte aufweist:
(a) Vorsehen von Mitteln (22) zum Beleuchten des Etiketts mit einem Laserstrahl; und
(b) Richten des Laserstrahls entlang eines optischen Pfads auf das Etikett, um räumlich benachbarte Teile des Etiketts abzutasten oder zu scannen.

5. Verfahren gemäß Anspruch 2 oder 3, wobei der Schritt das Übertragen eines deaktivierenden Signals die Eigenschaft einer Diode ändert, die in dem Überwachungsanhänger angebracht ist.

6. Ein Verkaufskassensystem zum Lesen von Strichcodesymbolen und zum elektronischen Überwachen von Artikeln, die ein Überwachungsetikett aufweisen, das einen aktivierten und einen deaktivierten Zustand besitzt und ein Strichcodesymbol aufweist, wobei das System folgendes aufweist:
(a) Mittel (22, 24, 44, 46) zum Scannen eines Etiketts, das ein Strichcodesymbol enthält;
(b) Sensormittel (54), die ein Sichtfeld besitzen und betriebsmäßig vorgesehen sind zum Detektieren von mindestens einem Teil von Licht mit variabler Intensität, das von dem Strichcodesymbol auf dem Etikett reflektiert wird, und zum Erzeugen eines elektrischen Signals als Anzeige für die detektierte Lichtintensität;
(c) Mittel (55, 68, 70) zum Verarbeiten des elektrischen Signals, um eine Datendarstellung zu erzeugen, die mit dem gescannten Strichcodesymbol assoziiert ist;
(d) Mittel (114) zum Anzeigen der Datendarstellung, um es dem Kunden zu ermöglichen, die Datendarstellung mit dem Artikel zu vergleichen; und
(e) Mittel zum Übertragen eines deaktivierenden Signals zu dem Etikett, um den Zustand des Etiketts aus einem aktivierten in einen deaktivierten Zustand zu verändern,
dadurch **gekennzeichnet,** daß die Mittel zum Übertragen eines deaktivierenden Signals Mittel aufweisen zum Erzeugen eines Laserlichtstrahls, der funktioniert, um das Etikett zu deaktivieren durch Verändern des Zustands einer Halbleiterkomponente bzw. eines Halbleiterbauteils, die bzw. das in dem Etikett in dem Pfad des Lichtstrahls angeordnet ist.

7. System gemäß Anspruch 6, wobei das System ferner Mittel (55) aufweist zum Verarbeiten des elektrischen Signals, um zu bestimmen, ob das reflektierte Licht mit variabler Intensität eine Anzeige bildet für das Vorhandensein eines vorbestimmten Indizien- oder Kennzeichnungsmusters, wie beispielsweise eines Strichcodesymbols.

8. System gemäß Anspruch 6, wobei das System ferner Mittel (55) aufweist zum Erzeugen eines Freigabesignals, wenn das reflektierte Licht mit der variablen Intensität eine Anzeige bildet für das Vorhandensein eines vorbestimmten Indizien- oder Kennzeichnungsmusters, wie beispielsweise eines Strichcodesymbols, und zum Übertragen eines deaktivierenden Signals zu dem Etikett ansprechend auf das Freigabesignal.

9. System gemäß Anspruch 6, wobei die Mittel (22, 24, 44, 46) zum Scannen eines Etiketts folgendes aufweisen:
(a) Mittel (22) zum Beleuchten des Etiketts mit einem Laserstrahl; und
(b) Mittel (44, 46) zum Richten des Laserstrahls entlang eines optischen Pfads auf das Etikett, um räumlich benachbarte Teile des Etiketts abzutasten oder zu scannen.

10. System gemäß Anspruch 6, wobei das Etikett Mittel aufweist zum Übertragen eines Rückkehrsignals zu dem Kassensystem.

11. System gemäß Anspruch 6, wobei das Etikett ein lichtempfindliches elektronisches Element aufweist, das auf das Laserlicht anspricht, um von einem aktivierten in einen deaktivierten Zustand zu wechseln.

## Revendications

1. Appareil (10) pour la lecture de symboles de code à barres et pour le contrôle électronique d'articles comportant une étiquette ou un label de surveillance ayant un état activé et un état désactivé, ledit appareil étant portable normalement uniquement par un utilisateur pour la lecture des symboles et comprenant:
(a) des moyens (22, 24, 44, 46) pour le balayage d'un label comportant un symbole de code à barres;
(b) des moyens de détection (54) ayant un champ de visée et fonctionnant pour détecter au moins une partie de lumière d'intensité variable réfléchie par le label et pour engendrer un signal électrique indicateur de l'intensité de lumière détectée;
(c) des moyens (55, 68, 70) pour traiter ledit signal électrique afin de déterminer si la lumière réfléchie d'intensité variable est indicatrice de la présence d'une configuration prédéterminée de signes telles qu'un symbole de code à barres; et
(d) des moyens pour transmettre un signal de désactivation à ladite étiquette ou audit label de manière à faire passer l'étiquette d'un état activé à un état désactivé, caractérisé en ce que
lesdits moyens de transmission d'un signal de désactivation comportent des moyens pour engendrer un faisceau de lumière laser qui fonctionne pour désactiver ladite étiquette ou ledit label en modifiant l'état d'un composant semiconducteur disposé dans l'étiquette ou le label dans le trajet dudit faisceau de lumière.

2. Procédé pour détecter un signe ayant des parties à coefficient de réflexion de la lumière différent telles que des symboles de code à barres sur un label associé à un article et pour désactiver une étiquette de surveillance associée au label et à l'article, comprenant les étapes suivantes:
(a) balayage d'un label contenant un symbole de code à barres;
(b) détection d'au moins une partie de lumière d'intensité variable réfléchie par le label avec un détecteur et génération d'un signal électrique indicateur de l'intensité de la lumière détectée;
(c) traitement dudit signal électrique pour déterminer si la lumière réfléchie d'intensité variable est indicatrice de la présence d'une configuration prédéterminée de signes telle qu'un symbole de code à barres; et
(d) transmission d'un signal de désactivation à ladite étiquette de manière qu'une caractéristique physique de ladite étiquette soit modifiée pour désactiver ladite étiquette, caractérisé en ce que
ladite étape de transmission d'un signal de désactivation comporte la transmission d'un faisceau laser à un élément électronique sensible à la lumière disposé sur la surface de ladite étiquette de surveillance.

3. Procédé selon la revendication 2, dans lequel ladite étape de traitement dudit signal électrique pour déterminer si la lumière réfléchie d'intensité variable est indicatrice de la présence d'une configuration prédéterminée de signes telle qu'un symbole de code à barres comporte en outre l'étape de génération d'un signal de validation si un symbole a été détecté; et ladite étape de transmission d'un signal de désactivation à ladite cible est sensible audit signal de validation de telle sorte qu'une caractéristique physique de ladite étiquette soit désactivée.

4. Procédé selon la revendication 2, dans lequel ladite étape de balayage d'un label comporte les étapes suivantes:
(a) fourniture de moyens (22) pour éclairer ladite étiquette par un faisceau laser; et
(b) direction dudit faisceau laser le long d'un trajet optique en direction du label de manière à balayer dans des parties spatialement adjacentes du label.

5. Procédé selon la revendication 2 ou 3, dans lequel ladite étape de transmission d'un signal de désactivation modifie la caractéristique d'une diode disposée dans ladite étiquette de surveillance.

6. Système de caisse de sortie d'un point de vente pour lire des symboles de code à barres et pour contrôler électroniquement des articles comprenant un label de surveillance ayant un état activé et un état désactivé, comportant un symbole de code à barres comprenant:
(a) des moyens (22, 24, 44, 46) pour balayer un label contenant un symbole de code à barres;
(b) des moyens détecteurs (54) ayant un champ de visée et fonctionnant pour détecter au moins une partie de lumière d'intensité variable réfléchie par le symbole de code à barres sur le label et pour engendrer un signal électrique indicateur de l'intensité de lumière détectée;
(c) des moyens (55, 68, 70) pour traiter ledit signal électrique afin d'engendrer une représentation de données associée au symbole de code à barres en cours de balayage;
(d) des moyens (114) pour afficher ladite représentation de données afin de permettre au client de comparer la représentation de données avec l'article; et
(e) des moyens pour transmettre un signal de désactivation audit label de manière à faire passer le label d'un état activé à un état désactivé, caractérisé en ce que
lesdits moyens pour transmettre un signal de désactivation comportent des moyens pour engendrer un faisceau de lumière laser qui fonctionne pour désactiver ledit label en modifiant l'état d'un composant semiconducteur disposé dans le label dans le trajet dudit faisceau de lumière.

7. Système selon la revendication 6, comprenant en outre des moyens (55) pour traiter ledit signal électrique afin de déterminer si la lumière réfléchie d'intensité variable est indicatrice de la présence d'une configuration prédéterminée de signes telle qu'un symbole de code à barres.

8. Système selon la revendication 6, comprenant en outre des moyens (55) pour engendrer un signal de validation lorsque la lumière réfléchie d'intensité variable est indicatrice de la présence d'une configuration prédéterminée de signes telle qu'un symbole de code à barres, et pour transmettre un signal de désactivation audit label en réponse audit signal de validation.

9. Système selon la revendication 6, dans lequel lesdits moyens (22, 24, 44, 46) pour balayer un label comportent:
(a) des moyens (22) pour éclairer ladite étiquette avec un faisceau laser; et
(b) des moyens (44, 46) pour diriger ledit faisceau laser le long d'un trajet optique en direction du label de manière à balayer des parties spatialement adjacentes de l'étiquette.

10. Système selon la revendication 6, dans lequel ladite étiquette comporte des moyens pour transmettre un signal de retour au système de caisse de sortie.

11. Système selon la revendication 6, dans lequel ledit label comporte un élément électronique sensible à la lumière réagissant audit faisceau laser en passant d'un état activé à un état désactivé.
